# EUROPEAN PATENT APPLICATION

(11) **EP 1 956 858 A1**
(43) Date of publication of application: **13.08.2008**
(21) Application number: 07002549.9
(22) Date of filing: 06.02.2007
(51) Int. Cl.: H04Q 7/38, H04L 29/06, H04Q 7/32

(54) **Method for updating a key in a telecommunication system**

(71) Applicant: Nokia Siemens Networks GmbH & Co. KG, 81541 München (DE)
(72) Inventor: Blommaert, Marc, 9140 Temse (BE)

(57) **Abstract**

The invention relates to a method for updating at least one key which is to be used by a component (BM-SC) of a mobile telecommunication network communicating with a User Equipment that includes a key management module (UICC) hosted by a Mobile Terminal being part of the User Equipment, comprising the steps of: Creating a key management input message within the component (BM-SC) of the telecommunication network comprising a common header payload, at least one payload identity and a message authentication code (MAC)/signature payload; extending the key update message by adding an output descriptor to the key management input message, especially before adding the message authentication code (MAC); transmitting the extended key management input message to the key management module of the terminal; evaluating the extended key management input message by the key management module (UICC) wherein, if the key management module (UICC) is conformant to a first release, the key management module (UICC) will ignore the output descriptor and wherein, if a key management module is conformant to a second release, the key management module (UICC) will parse the output descriptor for determining which of a plurality of payload identities in the key update message shall be used in a key management output message; creating the key management output message comprising the determined payload identities; and transmitting the key output message from the key management module (UICC) to the Mobile Terminal (MT).

## Description

The invention relates to a method for updating a least one key which is to be used by a component of a mobile telecommunication network communicating with a User Equipment that includes a key management module hosted by a Mobile Terminal being part of the User Equipment.

In a telecommunication system there is a need for a security protocol having a key management solution to exchange keys and related security parameters. There are some fundamental properties that such a key management scheme has to fulfill to serve streaming and real-time application (such as unicast and multicast), particularly in heterogeneous networks. A key management solution that addresses multimedia scenarios (e.g. SIP calls and RTSP sessions) is described in RFC 3830.

The key management protocol of RFC 3830 uses so called MIKEY messages (MIKEY = Multimedia Internet KEYing) and is designed to have an end-to-end security, simplicity, efficiency (low band width consumption, low computational work load, small code size, and minimal number of roundtrips), tunneling (possibility to "tunnel"/integrate MIKEY in session establishment protocols), and independence from any specific security functionality of the underlying transport. However, there are some apparent restrictions due to the way RFC 3830 is integrated and used between the UICC (Universal Integrated Circuit Card) and the Mobile Terminal for MBMS security in 3G [3]. It is the subject of this invention to describe a way to overcome these restrictions.

First, the formatting of a so called "command message" for communication between the key management application part of a UICC hosted by a Mobile Terminal, as known from the current specifications will be described. The key management application runs on a chip card (UICC), and is used in Mobile Terminals in GSM (Global System for Mobile Communications) and UMTS (Universal Mobile Telecommunications System) networks.

The UICC ensures the integrity and security of all kinds of personal data (e.g. Cryptographic keys and so on). In a GSM network, the UICC contains an SIM (Subscriber Identity Module) application and in a UMTS network it is a USIM (Universal Subscriber Identity Module) application. A UICC may contain several applications, making it possible for the same chip card to give access to both GSM and UMTS networks, and also provide storage of the phone book and other application. With the UMTS release 5 a new application, the IP multimedia services identity module (ISIM) is required for services in the internet multimedia subsystem IMS. The input/output fields of commands towards applications running on the UICC are fixed in each 3GPP specification release (3GPP = 3^{rd} Generation Partnership Project). These commands are described in 3GPP TS 31.102 [1] and 3GPP TS 31.103 [2]. Using fixed structures creates certain upgrade and compatibility restrictions when in a future release certain output fields are added. The deletion of fields' could be even more problematic.

Within this description the phrase 'key management module' is used for a key management application running on the UICC.

Specific 3GPP terminology is defined in TR 21.905 [7]. The most important terminology used in this description is User Equipment (UE) which is a device allowing a user access to network services. TR 21.905 also contains following explanations: 'For the purpose of 3GPP specifications the interface between the UE and the network is the radio interface. A User Equipment can be subdivided into a number of domains, the domains being separated by reference points. Currently defined domains are the USIM and ME Domains. The ME Domain can further be subdivided into several components showing the connectivity between multiple functional groups.

These groups can be implemented in one or more hardware devices. An example of such connectivity is the TE - MT interface. The Mobile Terminal (MT) is the part of the User Equipment and hosts the UICC.'

Below, the state of the art as known from section 7 of [1] is listed which contains following list of commands.

### AUTHENTICATE command

This command can be run in different contexts:
- a 3G security context, when 3G authentication vectors (RAND, XRES, CK, IK, AUTN) are available (i.e. the Mobile Terminal is located in the UTRAN (UMTS Terrestrial Radio Access Network), or in a GSM radio access network which is connected to a 3G or 3G capable VLR (Visitor Location Register)/SGSN (Serving GPRS Support Node)),
- a GSM security context, when GSM authentication data are available only (i.e. the Mobile Terminal is located in the GSM radio access network which is connected to a non-3G capable VLR/SGSN),
- a VGCS (Voice Group Call Service)/VBS (Voice Broadcast Service) security context, when VGCS/VBS authentication data is available,
- a GBA_U security context, when a GBA bootstrapping procedure is requested,
- a MBMS (Multimedia Broadcast Multicast Service) security context, when a MBMS security procedure is requested.

For the security context in 3GPP the input/output fields are fixed and one parameter can be controlled by activating a service 27. Below failure values are not mentioned:
Input:
   - RAND, AUTN (AUTN:= SQN ⊕ AK || AMF || MAC).
Output:
   - RES, CK, IK if Service n°27 is "not available".
      or
   - RES, CK, IK, K_{c} if Service n°27 is "available".
      or
   - AUTS.

For the security context in 2G these inputs/outputs are fixed, wherein failure values are not mentioned, too:
Input:
   - RAND.
Output:
   - SRES; K_{c}.

Similar fixings exist for VGCS/VBS security contexts and GBA security contexts (with two modes). This is described in [1]. The last AUTHENTICATE command SRES; K_{c} is a MBMS security context with two modes:
a) The MSK Update Mode
   Input:
   - MIKEY message
   Output:
   - MIKEY message
      or
   - None
b) The MTK generation Mode
   Input:
   - MIKEY message
   Output:
   - MTK and Salt (if available)

The compatibility/upgrade issues will be explained with a first example taken from TS 31.102 Rel-6 section 7 ([1]) and a self-created interface command change for a Rel-6 + X, wherein X >= 1 is. It is assumed a change in Rel-7 for the GBA security context in NAF derivation mode.

The GBA security context in NAF derivation mode according to section 7.1.2.4 of [1] is as follows:

**Table 1**

| ***Byte (s)*** | ***Description*** | ***Length*** |
|---|---|---|
| *1* | *"GBA Security* Context *NAF Derivation Mode" tag* = *'DE'* | *l* |
| *2* | *Length of NAF ID (L1)* | *l* |
| *3 to (L1+2)* | *NAF ID* | *L1* |
| *(L1+3)* | *Length of IMPI (L2)* | *l* |
| *(L1+4) to (L1+L2+3)* | *IMPI* | *L2* |

The response parameters/data for a successful command in the GBA security context in NAF derivation mode is as follows:

**Table 2**

| ***Byte (s)*** | ***Description*** | **Length** |
|---|---|---|
| *1* | *"Successful GBA operation" tag = 'DB'* | *l* |
| *2* | *Length of Ks ext NAF (L)* | *l* |
| *3 to (L+2)* | *Ks ext NAF* | *L* |

A hypothetical change in the Rel-7 Interface between the Mobile Terminal and the UICC is described in tables 1 and 2 in form of added parameters in bold at the end of table 3 for the input parameters of AUTHENTICATE command in NAF derivation mode:

**Table 3**

| ***Byte (s)*** | ***Description*** | ***Length*** |
|---|---|---|
| *1* | *"GBA Security Context NAF Derivation Mode" tag = 'DE'* | *l* |
| *2* | *Length of NAF ID (L1)* | *l* |
| *3 to (L1+2)* | *NAF ID* | *L1* |
| *(L1+3)* | *Length of IMPI (L2)* | *l* |
| *(L1+4) to (L1+L2+3)* | *IMPI* | *L2* |
| | ***Device-Id data (e.g. IMEI, Device* MAC *address)*** | *L3* |

The response parameters and data in case of a successful command in GBA security context in NAF derivation mode corresponds to the responds as shown in table 2:

**Table 4**

| ***Byte (s)*** | ***Description*** | ***Length*** |
|---|---|---|
| *1* | *"Successful GBA operation" tag = 'DB'* | *l* |
| *2* | *Length of Ks ext NAF (L)* | *l* |
| *3 to (L+2)* | *Ks ex t NAF* | *L* |

A Rel-6 Mobile Terminal is not able to supply the extra fields outlined in table 3. A Rel-7 USIM application however, can recognize the absence of the supplied input fields via e.g. not activated new service type as described in [1]. A Rel-7 Mobile Terminal could recognize via the not activated new service type that the outlined new input field shall not be supplied to the Mobile Terminal. Alternatively also a new mode of security context for the AUTHENTICATE command could be defined.

A second hypothetical change in Rel-7 Interface between the Mobile Terminal and the UICC is described in the output table as shown in table 6, wherein added parameters are outlined at the end of the output table. The inputs shown in table 5 correspond to those as shown in table 1.

**Table 5**

| ***Byte (s)*** | ***Description*** | ***Length*** |
|---|---|---|
| *1* | *"GBA Security Context NAF Derivation Mode" tag = 'DE'* | *l* |
| *2* | *Length of NAF ID (L1)* | *l* |
| *3 to (L1+2)* | *NAF ID* | *L1* |
| *(L1+3)* | *Length of IMPI (L2)* | *l* |
| *(L1+4) to (L1+L2+3)* | *IMPI* | *L2* |

**Table 6**

| ***Byte (s)*** | ***Description*** | ***Length*** |
|---|---|---|
| *1* | *"Successful GBA operation" tag = 'DB'* | *l* |
| *2* | *Length of Ks ext NAF (L)* | *l* |
| *3 to (L+2)* | *Ks ex t NAF* | *L* |
| | **MAC** | ***L2*** |

A Rel-6 Mobile Terminal is not able to recognize the extra output fields as outlined in table 6. The Rel-7 USIM application could suppress the outputs when it knows the release type of the mobile or via an e.g. not activated new service type. A Rel-7 Mobile Terminal could recognize via the not activated new service type that the bold outlined output field cannot be supplied. Alternatively, also a new mode of the security context could be defined to solve this problem.

Second, for Mobile Broadcast Multicast Services (MBMS) [3] further complexity is involved as key management messages do originate from a component of the telecommunication network (i.e. differently from the Mobile Terminal) and in future various message variance may appear. The component of the telecommunication network can be a BM-SC (The network entity sending key management messages for MBMS security). A characteristic of the examples explained above is that the capabilities of the Mobile Terminal and the key management module (on UICC) can be matched and checked locally. So, solutions are possible in which the capabilities of UICC are made visible to the Mobile Terminal or via defining new modes or commands. However, when for example a component of the telecommunication network (e.g. the BM-SC) supplies an input which may not be completely visible to the Mobile Terminal which should result in a variability of output fields then the proposed solution described above are hindering flexibility/upgradeability. This will be explained with a third and fourth example in the context of MBMS, i.e. MBMS security context in MTK update mode. For MBMS a network node, i.e. the component of the telecommunication network (e.g. BM-SC) is supplying key updates. A key update can be a MTK (MBMS Traffic Key) or MSK (MBMS Service Key) update in the form of MIKEY packets to the Mobile Terminals (which packet is then interfaced by the Mobile Terminal towards the UICC). Within 3GPP Rel-6 the MTK update mode is defined in section 7.1.2.5 as stated in [1]. Table 7 shows the MBMS security context of all modes:

**Table 7**

| ***Byte (s)*** | ***Description*** | ***Length*** |
|---|---|---|
| *1* | *MBMS Security Context Mode* | *l* |
| *2* | *Length of MIKEY message (L1)* | *l* |
| *3 to (L1+2)* | *MIKEY message* | *L1* |

**Table 8**

| ***Coding*** | **Meaning** |
|---|---|
| *'01'* | *MSK Update Mode* |
| *'02'* | *MTK Generation Mode* |

Table 9 shows the response parameters/data in the MBMS security context of MSK update mode, wherein a command is successful. The parameter in Byte 1 is present if a MIKEY verification message is returned.

**Table 9**

| ***Byte (s)*** | ***Description*** | ***Length*** |
|---|---|---|
| *1* | *"Successful MBMS operation" tag = 'DB'* | *l* |
| *2* | *Length of MIKEY (L)* | *l* |
| *3 to (L+2)* | *MIKEY message* | *L* |

Table 10 shows the response parameters/data in the MBMS security context (MTK generation mode) wherein the command is successful:

**Table 10**

| ***Byte (s)*** | ***Description*** | ***Length*** |
|---|---|---|
| *1* | *"Successful MBMS operation" tag = 'DB'* | *l* |
| *2* | *Length of MTK and Salt (if Salt key is available) (L)* | *1* |
| *3 to (L+2)* | *MTK* \| \| *Salt (if available)* | *L* |

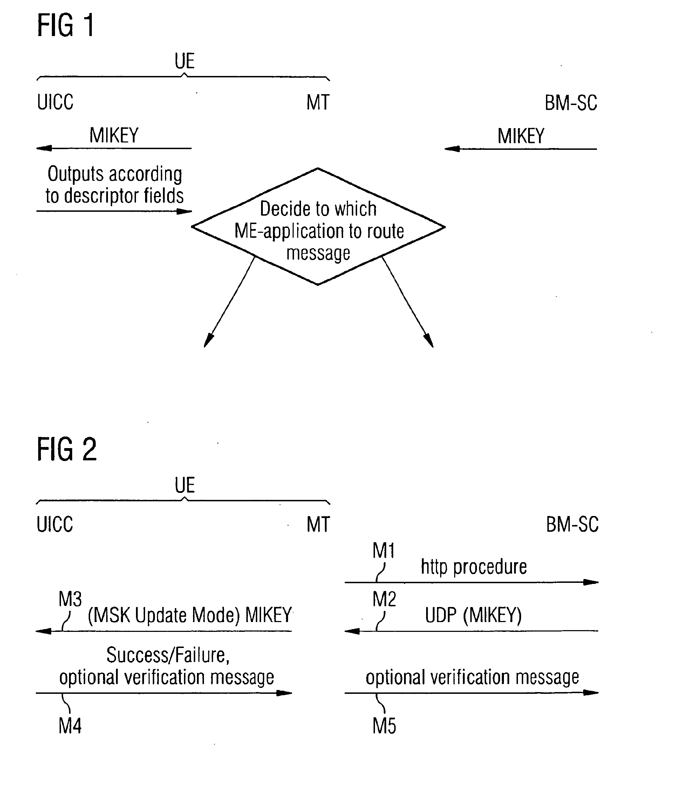

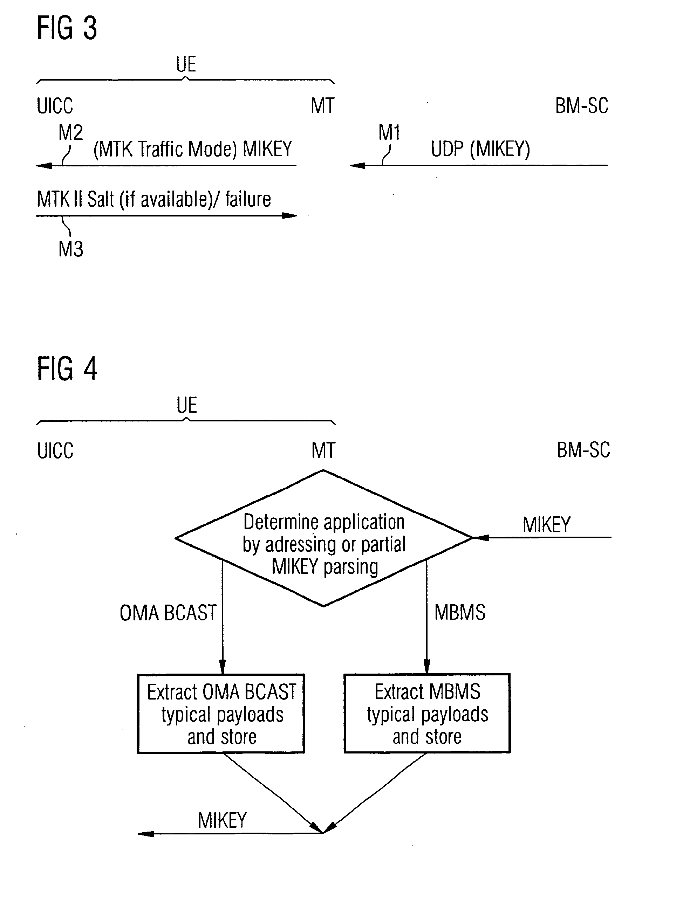

The coding of parameters is described in TS 33.246 [3]. In Figs. 2 and 3 the message flow of a MIKEY message according to TS 33.246 [3] is shown. Fig. 2 shows the interaction between a Mobile Terminal and a component of the telecommunication network BM-SC. A key management module included within the Mobile Terminal is depicted separately as included in the UICC. The User Equipment (UE) comprises both the MT and the UICC, and may include further Terminal Equipments. In a message M1 a HTTP procedure is sent from the User Equipment to BM-SC. As a response BM-SC sends a message M2 back. M2 is a MIKEY message transported via the user datagram protocol UDP. After receiving message M2, the MT (as part of the User Equipment) sends message M3 which is a further MIKEY message of the type MSK update mode to UICC. In a message M4 which is transmitted from UICC to ME success or failure of the MSK update is communicated. Optional message M4 can comprise a verification message. If such an optional verification message is sent from UICC to MT a further optional verification message M5 is transmitted from the User Equipment to BM-SC.

Fig. 3 shows the generation and validation of an MTK generation mode. M1 is a message which is transferred from BM-SC to UE. M1 is a MIKEY message transported over UDP. Message M2 which is transmitted from MT to UICC is a further MIKEY message of the type MTK traffic mode. After parsing the MIKEY message M2 UICC transmits a message M3 to MT of the type MTK or a salt string if it is available. In these cases the MTK generation was successful. Otherwise message M3 contains a failure which is transmitted to MT.

In case of new features in Rel-7 changed outputs in the field structure would be the result. Suppose the following hypothetical features:

### 1. Transport of multiple MTK's

Table 11 shows the response parameters/data in the MBMS security context in the MTK generation mode, wherein the command is successful. Changes according to the output field structure according TS 31.102 are outlined in bold. For the transport of multiple MTKs the number of next MTKs and length as well as information about the first additional MTK (including possible salt), the next additional MTK (including possible salt string) and the last MTK (including the possible salt string) have to be added to the response parameters/data as shown in table 10.

**Table 11**

| ***Byte (s)*** | ***Description*** | ***Length*** |
|---|---|---|
| *1* | *"Successful MBMS operation" tag = 'DB'* | *1* |
| *2* | *Length of MTK and Salt (if Salt key is available) (L)* | *1* |
| *3 to (L+2)* | *MTK* ∥ *Salt (if available)* | *L* |
| | ***Number of next MTKs and Length*** | |
| | ***First additional MTK (including possible Salt)*** | |
| | ***Next additional MTK (Including** possibly Salt)* | |
| | ***Last MTK (including possibly Salt)*** | |

### 2. Variable MTK length / salt string length

The response parameters/data in the MBMS security context in the MTK generation mode, wherein the command is successful is shown in table 12.

**Table 12**

| ***Byte (s)*** | ***Description*** | ***Length*** |
|---|---|---|
| *1* | *"Successful MBMS operation" tag = 'DB'* | *1* |
| *2* | *Length of MTK and Salt (if Salt key is available) (L)* | *1* |
| *3 to (L+2)* | *MTK* \|\| *Salt (if available)* | *L* |

It can be seen that table 12 corresponds to table 10. For MBMS the salt string or key shall be available for the SRTP protocol (SRTP = Secure Real Time Transport Protocol) but not for download protection. However, for OMA BCAST the salt string would not be added within the MIKEY input packet. Therefore, the salt key cannot be part of the output fields. For MBMS the MTK length is 128 bit. Within OMA BCAST it is also possible that the MTK is wrapped by AES-128 with a terminal binding key (TBK). In this case, the MTK length would be 256 bit. The salt key, when present, is 112 bit. From 3GPP Rel-6 view point and OMA BCAST reuse, there are three different lengths possible for the output keys: a) 256 bit (OMA BCAST), b) 128 bit (MBMS, MTK for download), and c) 128 + 112 bit(MBMS, MTK for streaming) → aligns to 16 + 15 bytes. The interpretation of the contents is left completely at the discretion of the Mobile Terminal application. Introduction of other keys lengths might make the processing task in the MT more difficult.

### 3. Additional output keys from other type than MTK

The change in the output message in this case is shown in table 13 wherein changes have been outlined in bold.

**Table 13**

| ***Byte (s)*** | ***Description*** | ***Length*** |
|---|---|---|
| *1* | *"Successful MBMS operation" tag = 'DB'* | *1* |
| *2* | *Length of MTK and Salt (if Salt key is available) (L)* | *1* |
| *3 to (L+2)* | *MTK* \|\| *Salt (if available)* | *L* |
| | **Length of other key** | |
| | **Other key type** | |
| | **Other key** | |

Additional output keys from other type than MTK will need additional identifier and fields. Compared to table 10, information about the length of other key, other key type and other key have been added.

### 4. Additional decrypted information

The response parameters/data of the output field structure in a MBMS security context in a MTK generation mode, wherein a command is successful is shown in table 14.

**Table 14**

| ***Byte (s)*** | ***Description*** | ***Length*** |
|---|---|---|
| *1* | *"Successful MBMS operation" tag = 'DB'* | *1* |
| *2* | *Length of MTK and Salt (if Salt key is available) (L)* | *1* |
| *3 to (L+2)* | *MTK ∥ Salt (if available)* | *L* |
| | **Length of other info** | |
| | **Other decrypted info information type** | |
| | **Other info** | |

As can be seen from table 14 information about length of other info, other decrypted info, information type, and other info has been added to the output field structure of table 10.

### 5. Additional fields which only need authentication

For this feature, currently the User Equipment reads the MIKEY packet and extracts some unencrypted fields before transmitting the MIKEY packet to UICC. An example for an unencrypted field is a security policy payload (SP) in an MSK update message. If the MIKEY packet authentication fails then the security policy payload has to be thrown away by User Equipment. A disadvantage of this procedure is that UE has to parse the MIKEY packets transmitted from BM-SC to recognize the difference between MTK and MSK updates in order to select the right update mode to UICC. However, this may be done without parsing the MIKEY message as both types of messages are transported from the network via different procedures toward UE.

Another example for this hypothetical feature is OMA BCAST which wants to reuse the MIKEY key management for MBMS and will add an own MIKEY extension to the MIKEY payload that only needs authentication (see [5]). The OMA BCAST application which is running on the User Equipment will first need to parse the MIKEY message and extract the necessary fields for the User Equipment and then let the MT part of the UE interface with the UICC. On an authentication failure the extracted fields have to be thrown away. When both applications (MBMS and OMA BCAST) are active on UE, then these applications extract OMA BCAST typical payloads and MBMS typical payloads, respectively. This is shown in Fig. 4. However, this procedure results in unnecessary workload for the UE.

In case of one of the hypothetical features 124 has to be realized then different releases of UICC and/or MT had to be provided. For combining the described difference of changes extra control information, e.g. about the service type, will be needed or to be defined or negotiated between MT and BM-SC in order to match a certain Mobile Terminal Rel-x with Rel-y of the key management module application and with Rel-z of the MIKEY packets originated by BM-SC. It is to be noted that any unknown MIKEY fields are ignored for the output by the MBMS application on the UICC from REL-6 on even if the unknown MIKEY fields are still authenticated by MIKEY.

Table 15 shows the result of the analysis of capability issues from a 3GPP release viewpoint by means of examples. Thereby, those potential enhancements are taken into consideration which seems to be most likely candidates for future feature inclusion.

**Table 15**

| | MBMS MIKEY Packet according Rel-6 arrives. | OMA BCAST MIKEY packet | MIKEY packets transporting multiple keys (3GPP Rel-X) | MIKEY packet transporting other to be decrypted info (3GPP Rel-Y with Y >X) |
|---|---|---|---|---|
| MT Rel-6, UICC Rel-6 | Conforming to specification | UICC application ignores unknown OMA BCAST extention. | UICC application ignores unknown fields | UICC application ignores unknown fields |
| MT Rel-6, UICC Rel-X | If the OMA BCAST MIKEY fields would be added as mandatory for Rel-X conformance, then the Rel-X UICC will reject received packets. But from the MT-UICC interface point of view there are no extra output field expected towards the Rel-6 MT. → Compatibility with earlier 3GPP releases shall be ensured, so the Rel-X UICC can only reject MIKEY packets if a clear indication of Rel-X is given to the UICC. | See previous column | The output fields from UICC-MT have to be designed in Rel-X such that the Rel-6 ME still understands the output of the UICC Rel-X. | UICC application will ignore unknown fields. The MT will not know. |
| MT Rel-X, UICC Rel-X | See above: the Rel-X ME may be expecting extra key management information, and can act upon the received output information of the key management module. | | Conforming to specification | UICC application will ignore unknown fields. The MT will not know. |

It is therefore an object of the present invention to provide an enhanced method for updating at least one key which is to be used by a Mobile Terminal (MT) for exchanging data with a component of a mobile telecommunication network with the aid of a key management module in the Mobile Terminal which reduces upgrade and compatibility restrictions in future releases of key management messages, key management modules and Mobile Terminal in case Input fields are added or deleted from Input MIKEY messages, or expected to be contained in the output of the key management module.

This problem is solved by a method comprising the steps of: creating a key management input message within a component of the telecommunication network comprising a common header payload, at least one payload identity and a message authentication code (MAC) payload (the MAC is to be generated after having all input fields available); extending the key management input message by adding an output descriptor to the key management input message, especially before adding the message authentication code (MAC); transmitting the extended key management input message to the key management module of the Mobile Terminal; evaluating the extended key management input message by the key management module wherein, if the key management module is conformant to a first release, the key management module will ignore the output descriptor and wherein, if a key management module is conformant to a second release, the key management module will parse the output descriptor for determining which of a plurality of payload identities in the key update message shall be used in a key output message; creating the key management output message comprising the determined payload identities; and transmitting the key management output message from the key management module to the Mobile Terminal.

According to a preferred embodiment of the invention the key management input message is a MIKEY message.

The proposed solution is to add an output descriptor in the MIKEY packet which is sent out by the component of the telecommunication network, e.g. a BM-SC, to the key management module, e.g. an UICC. The output descriptor can be added for both MTK and MSK updates. With the help of the output descriptor it is possible to give the key management module information about which payload identities from the MIKEY packet shall be used for the output message of the key management module to the Mobile Terminal. According to the known standards, a Rel-6 conformant UICC application will ignore the output descriptor in the MIKEY packet while an upgraded UICC application, e.g. Rel-x wherein x >= 7 will be able to use the information in the output descriptor to generate the necessary output fields. With respect to the prior art, the key management input message will be extended (before adding a MAC) by an additional MIKEY input field with which it is possible to control in an authenticated way the output fields from a secure key management module to the Mobile Terminal by the component of the telecommunication network.

The extended key management input message can be used for updating a MBMS Service Key (MSK) or a MBMS Traffic Key (MTK) .

An output descriptor identifier needs to be assigned. Preferably, the output descriptor identifier is built according to be an IANA registry value, such that it can be used for indication of next payload. Further, the output descriptor values comprise at least one output identifier which will be used by the key management module for the key management output message.

The key management output message comprises an output string with the output identifiers which can be read by the Mobile Terminal. Further, the key output message may comprise an ignored field string with those output identifiers which were ignored by the key management module. The output string and/or the ignored field string have a message structure that can be parsed by the Mobile Terminal.

An advantage of the invention is that the interface between the key management module and the Mobile Terminal can be defined in an abstract way removing/reducing the need for 3GPP release specific modifications to this interface if additional key management features are added. The output of the key management module to the Mobile Terminal will be under full control of the component of the mobile telecommunication network. Therefore, there will be a better control also of the ignored key management input fields, if the IANA registry values are outputted to the Mobile Terminal for purpose of error detection and testing.

The invention further comprises a computer program product which is directly loadable into the internal memory of a digital computer, comprising software portions for performing the steps of method described when said product is run on a computer.

The invention further will be explained with reference to the drawings.
- Fig. 1: shows the message flow according to the invention,
- Fig. 2: shows the interaction between the key management module in a Mobile Terminal and a component of the telecommunication network for a MSK update according to the prior art,
- Fig. 3: shows the interaction between a key management module of a Mobile Terminal and a component of a telecommunication system for a MTK generation and validation according to the prior art, and
- Fig. 4: shows the message flow of a MIKEY message according to the prior art.

According to the invention it is proposed to add an output descriptor in a MIKEY packet that is sent out by a component of the telecommunication network for both MTK and MSK updates to the key management module of a Mobile Terminal. The aim of providing the output descriptor in the MIKEY packet is to let the key management module have information how to build the output structure of the key management module to the Mobile Terminal i.e. about which payload identities from the MIKEY packet shall be used for the output of the key management module to the Mobile Terminal.

According to the syntax of a MIKEY message from RFC 3830 this could be described in the following way wherein it is to be noted, that the structure below is just to illustrate the basic idea. Different variances are possible and still conforming to the same basic idea.

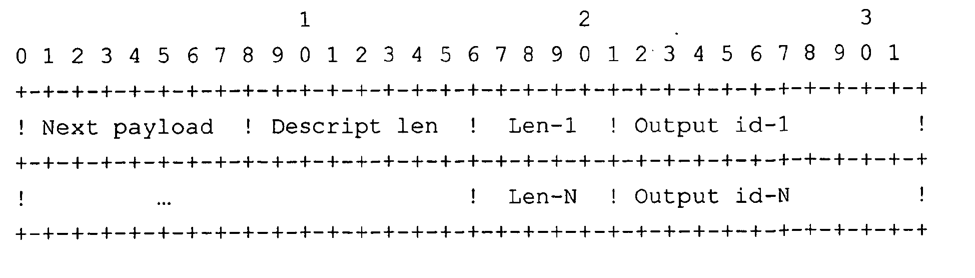

Existing payload identities are specified in RFC 3830 in the below shown sections (For a more complete list see RFC 3830).

| Next payload | Value | Section |
|---|---|---|
| Last payload | 0 | - |
| KEMAC | 1 | 6.2 |
| PKE | 2 | 6.3 |
| DH | 3 | 6.4 |
| SIGN | 4 | 6.5 |
| T | 5 | 6.6 |
| ID | 6 | 6.7 |
| CERT | 7 | 6.7 |
| CHASH | 8 | 6.8 |
| V | 9 | 6.9 |
| SP | 10 | 6.10 |
| RAND | 11 | 6.11 |
| ERR | 12 | 6.12 |
| Key data | 20 | 6.13 |
| General Ext. | 21 | 6.15 |

At least one of the payload identities is part of the output descriptor which is added to the MIKEY packet. Within the general extension of the payload of the MIKEY packet new extension payload values can be defined as defined in section 6.15 of RFC 3830. These extension payload values are IANA values.

| Type | Value | Comments |
|---|---|---|
| Vendor ID | \|0 | Vendor specific byte string |
| SDP IDs | 1 | List of SDP key mgmt IDs (allocated for use in [KMASDP]) |

If for example, a variable Key-ID requests the registration of value 3 for key-ID as a sub-value of the extension payload with value 21, it has to be indicated that key-ID payloads are to be outputted from the key management module. The descriptive field therefore will need to contain the value 21.3.

This procedure is similar for a new OMA extension payload. If the key management module has to transmit this value to the Mobile Terminal then 21.x needs to be indicated in the descriptive field. Thereby x stands for the IANA registry value of a payload.

For all changes the output structure of the MTK generation mode, when successfully executed, will become (wherein it is to be noted, that the structure below is just to illustrate the basic idea. Different variances are possible and still conforming to the same basic idea):

**Table 16**

| ***Byte (s)*** | ***Description*** | **Length** |
|---|---|---|
| *1* | *"Successful MBMS operation" tag* = *'DB'* | *l* |
| *2* | **Key Generation Module Output length** | *1* |
| *3* | **Output *String*** | *L1* |
| *3+L1* | **Key Generation Module Ignored field list** | *l* |
| *3+L1+L3* | **Ignored field String** | *L2* |
| | | |

In this table 16 the bold text is new with respect to the prior art. It is to be noted, that the output message as shown in table 16 comprises information about a key generation module output length and an output string as well as information about a key generation module ignored field list and an ignored field string. Both, the output string and the ignored field string are self descriptive. This means, a message structure that can be parsed by the Mobile Terminal. The syntax for the output string (is a general structure that can be used for ignored field string as well) message can be as shown below:

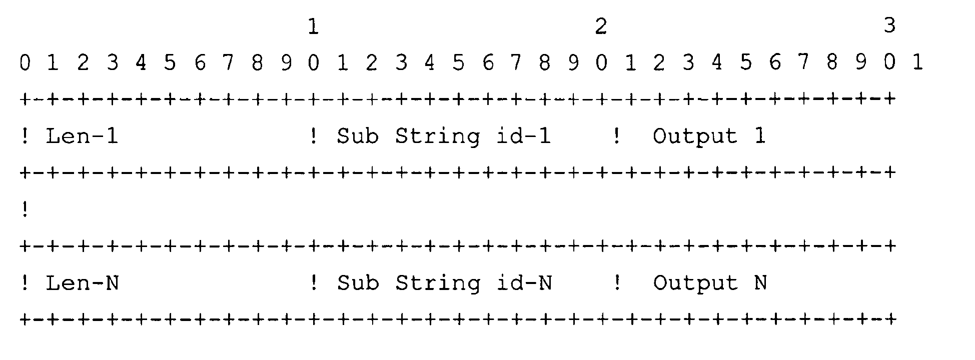

The syntax is just an example and may be modified in appropriate manner.

The general output structure for a MSK generation can be:

**Table 17**

| ***Byte (s)*** | ***Description*** | ***Length*** |
|---|---|---|
| *1* | *"Successful MBMS operation" tag* = *'DB'* | *l* |
| *2* | ***Key Generation Module Output length*** | *l* |
| *3* | ***Output String*** | *L1* |
| *3+L1* | ***Key Generation Module Ignored field list*** | *l* |
| *3+L1+L3* | ***Ignored field String*** | *L2* |
| | MIKEY verification Message Length | |
| | Verification message | |

The output message in Table 17 comprises the same information as stated above in connection with table 16. Both, output string and ignored field string are self descriptive, i.e. the message structure can be parsed by the Mobile Terminal.

The ignored field-list can be described as an ignored payload type list in a similar way as the output descriptor in the MIKEY input field:

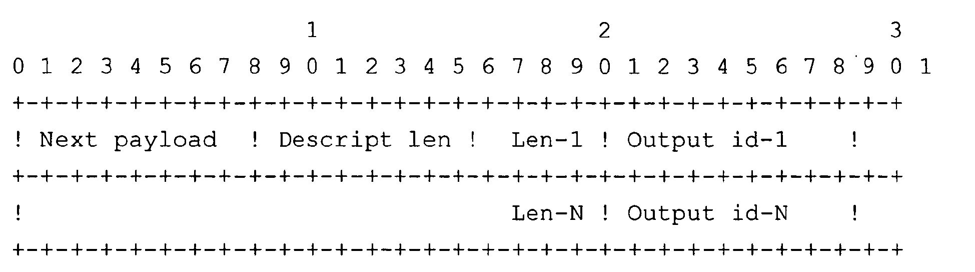

One advantage of the method according to the invention is that the handling of MIKEY messages in the Mobile Terminal can be simplified as can be seen in Fig. 1. The MIKEY message which is sent from e.g. the BM-SC to User Equipment can be transmitted without reading and taking out information in the MT part of the UE to the key management module on UICC. The key management module sends an output message according to output descriptive fields which have been added to the MIKEY message back to ME. After having received this message, UE decides to which UE-application the message has to be routed.
[1] TS 31.102, Characteristics of the Universal Subscriber Identity Module (USIM) application http://www.3gpp.org/ftp/Specs/html-info/31102.htm
[2] TS 31.103, Characteristics of the IP Multimedia Services Identity Module (ISIM) application http://www.3gpp.org/ftp/Specs/html-info/31103.htm
[3] TS 33.246, Security of Multimedia Broadcast/Multicast Service (MBMS) http://www.3gpp.org/ftp/Specs/html-info/33246.htm
[4] TS 33.220, Generic Authentication Architecture (GAA); Generic bootstrapping architecture http://www.3gpp.org/ftp/Specs/html-info/33220.htm
[5] http://tools.ietf.org/wg/msec/draft-dondeti-msec-mikey-genext-oma-02.txt; Sep 2006
[6] http://tools.ietf.org/wg/msec/draft-ietf-msec-newtype-keyid/draft-ietf-msec-newtype-keyid-05.txt; March 2006
[7] TR 21.905: "Vocabulary for 3GPP Specifications". http://www.3gpp.org/ftp/Specs/html-info/21905.htm

## Claims

1. A method for updating at least one key which is to be used by a component (BM-SC) of a mobile telecommunication network communicating with a User Equipment that includes a key management module (UICC) hosted by a Mobile Terminal being part of the User Equipment, comprising the steps of
- Creating a key management input message within the component (BM-SC) of the telecommunication network comprising a common header payload, at least one payload identity and a message authentication code (MAC) payload;
- extending the key management input message by adding an output descriptor to the key management input message especially before adding the message authentication code (MAC);
- transmitting the extended key management input message to the key management module hosted by the Mobile Terminal;
- evaluating the extended key management input message by the key management module (UICC) wherein, if the key management module (UICC) is conformant to a first release, the key management module will ignore the output descriptor and wherein, if a key management module (UICC) is conformant to a second release, the key management module (UICC) will parse the output descriptor for determining which of a plurality of payload identities in the key update message shall be used in a key management output message to the Mobile Terminal;
- creating the key management output message comprising the determined payload identities; and
- transmitting the key management output message from the key management module (UICC) to the Mobile Terminal (MT).

2. The method according to claim 1, wherein the key management input message is a MIKEY message.

3. The method according to claim 1 or 2, wherein the extended key management input message is used for updating a MBMS Service Key (MSK) or a MBMS Traffic Key (MTK).

4. The method according to one of the preceding claims, wherein the output descriptor comprises an identifier for the MIKEY field "next payload".

5. The method according to one of the preceding claims, wherein the output descriptor comprises at least one output identifier which will be used in the key management output message to the Mobile Terminal.

6. The method according to claim 5, wherein the output identifier is built according to an IANA registry value.

7. The method according to one of the preceding claims, wherein the key management output message comprises an output string with the output identifiers.

8. The method according to one of the preceding claims, wherein the key management output message comprises an ignored field string with those output identifiers which were ignored by the key management module.

9. The method according to claim 7 or 8, wherein the output string and/or the ignored field string have a message structure that can be generically parsed by the User Equipment.

10. A computer program product directly loadable into the internal memory of a digital computer, comprising software code portions for performing the steps of claim 1 when said product is run on a computer.
